# EUROPEAN PATENT SPECIFICATION

(11) **EP 4 197 719 B1**
(45) Date of publication and mention of the grant of the patent: **03.12.2025**
(21) Application number: 22200376.6
(22) Date of filing: 07.10.2022
(51) Int. Cl.: B25J 15/06, B65H 5/14, B29C 31/08, B29C 37/00, B29C 70/38

(54) **GRIPPING APPARATUS AND ASSOCIATED SYSTEMS AND METHODS FOR GRIPPING FLEXIBLE MATERIALS**
GREIFVORRICHTUNG UND ZUGEHÖRIGE SYSTEME UND VERFAHREN ZUM GREIFEN VON FLEXIBLEN MATERIALIEN
APPAREIL DE PRÉHENSION ET SYSTÈMES ET PROCÉDÉS ASSOCIÉS POUR SAISIR DES MATÉRIAUX SOUPLES

(30) Priority: 15.12.2021 US 202117644376
(43) Date of publication of application: 21.06.2023
(73) Proprietor: The Boeing Company, Arlington, VA 22202 (US)
(72) Inventor: Halbritter, Allen, Chicago, 60606-1596 (US)
(74) Representative: Witte, Weller & Partner Patentanwälte mbB

(56) References cited:
- US-A1- 2019 344 447
- US-A1- 2021 107 169

## Description

### FIELD

The present disclosure generally relates to the transportation of flexible materials and, more particularly, to gripping apparatus and associated methods and systems for gripping flexible materials, such as a composite plies.

### BACKGROUND

Manufacturing of large composite parts, particularly in the aerospace industry, requires movement of flexible material, such as uncured or partially cured composite materials (e.g., prepreg plies). Uniformly gripping flexible materials for moving between manufacturing stations without distorting the flexible material can be difficult. Typical methods for moving such flexible materials include holding the flexible material in discrete locations at a constant grip force. Drawbacks include causing a non-uniform pressure or tension across the part surface. Non-uniform tension and/or pressure may result in damage to the flexible materials.

Accordingly, those skilled in the art continue research and development in the field of transporting flexible materials.

Document US 2021/0107169 A1, according to its abstract, states systems and methods for vacuum handling of composite parts. One embodiment is a method for picking up, placing, and compacting an object. The method includes covering a part of an object with an impermeable membrane, applying a negative pressure via an end effector that is sufficient to offset any air leaks between a first portion of the impermeable membrane and the object, thereby forming a suction hold that secures the object to the impermeable membrane, and transporting the object to a rigid tool while the suction hold is retained. The method further comprises applying a negative pressure via the end effector that offsets air leaks between a second portion of the impermeable membrane and the rigid tool, thereby forming a suction hold that compacts the object to the rigid tool. Document US 2021/0107169 A1 further states that the disclosure relates to the field of assembly, and in particular, to placement and compaction of objects such as preforms onto rigid tools. A preform for a composite part may be incapable of supporting itself when placed onto a sloped surface of a. rigid tool. In particular, placement of large preforms onto rigid tooling that exhibits a complex curvature (e.g., barrel shapes) remains complicated. This is because large preforms have an increased chance of peeling or shifting from the rigid tooling during or after placement. Furthermore, materials such as tacky tape used to secure a vacuum bag to the surface of a rigid tool are not contact approved, and hence are not allowed to touch uncured composite material. As a result, the entire layup must be completed prior to compaction of the layup to the rigid tooling via a vacuum bag. These difficulties are further compounded when preforms are placed around an entire circumference of a rigid tool prior to being hardened. If the preforms are not quickly and firmly compacted onto the rigid tool, then peeling may occur, which may in turn necessitate rework. FIG. 2 of document US 2021/0107169 A1 is a flowchart illustrating a method for performing vacuum securement of a part in an illustrative embodiment. The steps of the method are described with reference to vacuum securement system of FIG. 1 of document US 2021/0107169 A1, but those skilled in the art will appreciate that method may be performed in other systems. The steps of the flowcharts described are not all inclusive and may include other steps not shown. The steps described may also be performed in an alternative order. In one step, an end effector is disposed proximate to (e.g., over) the object (e.g., preform). In one embodiment, this comprises operating the end effector in accordance with a Numerical Control (NC) program at vacuum securement system, in order to guide the end effector into position over the object. At this point, an impermeable membrane may surround a border of the end effector. In one step, the object is covered with an impermeable membrane via the end effector. In one embodiment, a first portion of the impermeable membrane is surrounded by the object, while a second portion of the impermeable membrane surrounds the object. That is, the first portion is within the bounds of the object, and is therefore capable of applying suction directly to the object. The second portion extends beyond the bounds of the object, and therefore is capable of applying suction to an area that surrounds the object. This has the effect of drawing the impermeable membrane against the area that surrounds the object, which compacts the object. The impermeable membrane is impermeable to gas, and may comprise a plastic or rubberized sheet. The impermeable membrane is not glued or attached to the object, but rather rests atop the object. When a vacuum is applied to the impermeable membrane (e.g., via one or more holes within an interior of the impermeable membrane), the borders of the impermeable membrane will form a suction hold against the object, when more air is being drawn out than is capable of entering via any leaks between the object and the impermeable membrane at the border of the impermeable membrane. In one step, the end effector applies negative pressure sufficient to offset/overcome any air leaks between a first portion of the impermeable membrane and the object. That is, when negative pressure is applied, the borders of the first portion of the impermeable membrane are drawn into suction contact with the object, because as air is removed the borders of the impermeable membrane are brought into contact with the object. This operation forms a suction hold that secures the object to the impermeable membrane, regardless of air leaks that might occur between the impermeable membrane and the object. In one step, the end effector transports the object to a rigid tool (e.g., mandrel) while the suction hold is retained. In one embodiment, this step comprises operating one or more actuators and/or rail systems to drive the end effector into position over the rigid tool while negative pressure continues to be applied. The end effector may further place the object into position within a trough. In further embodiments, multiple end effectors are operated synchronously to transport the object. In one step, the end effector applies negative pressure sufficient to offset any air leaks between a second portion of the impermeable membrane and the rigid tool, thereby forming a suction hold that secures the object to the rigid tool. In one embodiment, the second portion surrounds the first portion, and covers (or is in fluid communication with a preliminary compaction bag that covers) the boundaries of the object. When negative pressure is applied, the second portion applies suction that pulls the second portion towards the rigid tool. This suction hold compacts the object into place at the rigid tool, which activates the tackifier via pressure. In one embodiment, applying negative pressure to the second portion draws air from a preliminary compaction bag which covers the object and extends beyond a perimeter of the object. After compaction has been completed, the end effector stops applying negative pressure, and the suction hold applied to thé object and/or rigid tool is released. The current object is then covered with an intermediate compaction bag that applies a greater amount of compaction force, and the end effector 142 then travels to retrieve and place another object. FIGS. 3-5 of document US 2021/0107169 A1 are diagrams illustrating operation of a vacuum securement system to pick up a preform for a stringer in an illustrative embodiment. In this embodiment, vacuum securement system comprises multiple end effectors. Each end effector is mounted to an actuator and includes a securement pad (e.g., a combination of permeable and impermeable components). Each securement pad includes a first stage for picking up an object, and a second stage for compacting the object to a rigid tool. During operation, each securement pad is placed into a gap within a preliminary compaction bag that covers a preform. When applying suction to grip the object, pump applies suction by removing a higher volume of air than is lost via gaps between a first stage of the securement pad and the preform. This means that the first stage of the securement pad does not need to be sealed via tape, sealant, or other materials to the object being transported. Instead, this component is capable of relying on suction applied by pump 340 in order to perform picking and placing of an object. When applying suction to compact the object to a rigid tool, the pump provides sufficient volumetric flow to offset air leaks between a second stage of the securement pad and the preliminary compaction bag, as well as air leaks between the preliminary compaction bag and the rigid tool. This means that the second stage of the securement pad does not need to be sealed via tape, sealant, or other materials to the rigid tool, nor does the preliminary compaction bag have to be secured via such means. Instead, these components are capable of relying on suction applied by pump in order to perform compaction. Controller manages the operations of the pump, the actuators, and the end effectors in accordance with an NC program stored in memory. Controller may be implemented, for example, as custom circuitry, as a hardware processor executing programmed instructions, or some combination thereof. In one embodiment, pump applies twenty-two to twenty-nine inches of mercury of negative pressure to form a vacuum, but at tens of Cubic Feet per minute (CFM) of airflow (e.g., between fifty and two hundred CFM). Hence, pump may be capable of maintaining a pressure of at least one inch of mercury across an area covered by the preliminary compaction bag. Controller manages the operations of pump based on input from a sensor such as a pressure sensor or flow rate sensor, in order to ensure that vacuum is constantly within a desired range to overcome leaks along the perimeter of the preliminary compaction bag. For example, controller may increase or decrease a speed or intensity of pumping operations in order to maintain a constant volume flow of air, or in order to maintain a constant negative pressure.

### SUMMARY

The following is a non-exhaustive list of examples, which may or may not be claimed, of the subject matter according to the present disclosure.

Disclosed are gripping apparatus.

There is provided a gripping apparatus including an impermeable layer defining a vacuum port, a first flow media layer associated with the impermeable layer, and a second flow media layer opposed from the first flow media layer to define a receiving space therebetween. A second impermeable layer is associated with the second flow media layer, wherein the first flow media layer and the second flow media layer are between the impermeable layer and the second impermeable layer, wherein the second flow media layer is adjacent to the second impermeable layer.

There is provided a system for gripping a flexible material includes a gripping apparatus. The gripping apparatus has an impermeable layer, a first flow media layer associated with the impermeable layer of the gripping apparatus, and a second flow media layer opposed from the first flow media layer of the gripping apparatus to define a first receiving space therebetween. The system further includes a second gripping apparatus. The second gripping apparatus has an impermeable layer, a first flow media layer associated with the impermeable layer of the second gripping apparatus, and a second flow media layer opposed from the first flow media layer of the second gripping apparatus to define a second receiving space therebetween. The second gripping apparatus further comprises a second impermeable layer associated with the second flow media layer of the second gripping apparatus, and wherein the first flow media layer of the second gripping apparatus and the second flow media layer of the second gripping apparatus are between the impermeable layer of the second gripping apparatus and the second impermeable layer of the second gripping apparatus. The system further includes a vacuum source in fluid communication with the gripping apparatus and the second gripping apparatus.
Further, there is provided a method for gripping a flexible material, the flexible material comprising a first portion and second portion, the method comprising placing a gripping apparatus into contact with the first portion of the flexible material, the gripping apparatus comprising an impermeable layer and a flow media layer, wherein the gripping apparatus further comprises a second impermeable layer and a second flow media layer, and wherein the flow media layer of the gripping apparatus and the second flow media layer of the gripping apparatus are between the impermeable layer of the gripping apparatus and the second impermeable layer of the gripping apparatus; drawing a vacuum between the gripping apparatus and the first portion of the flexible material to engage the first portion of the flexible material with the gripping apparatus; placing a second gripping apparatus into contact with the second portion of the flexible material, the second gripping apparatus comprising an impermeable layer and a flow media layer, wherein the second gripping apparatus further comprises a second impermeable layer and a second flow media layer, and wherein the flow media layer of the second gripping apparatus and the second flow media layer of the second gripping apparatus are between the impermeable layer of the second gripping apparatus and the second impermeable layer of the second gripping apparatus; and drawing a vacuum between the second gripping apparatus and the second portion of the flexible material to engage the second portion of the flexible material with the second gripping apparatus.

### BRIEF DESCRIPTION OF THE DRAWINGS

FIG. 1 is a cross-sectional schematic view of a gripping apparatus;
FIG. 2 is a cross-sectional schematic view of a system for gripping a flexible material;
FIG. 3 is a flow chart of a method for gripping a flexible material;
FIG. 4 is a flow chart is a block diagram of aircraft production and service methodology; and
FIG. 5 is a schematic of the aircraft.

### DETAILED DESCRIPTION

The following detailed description refers to the accompanying drawings, which illustrate specific examples described by the present disclosure. Other examples having different structures and operations do not depart from the scope of the present disclosure. Like reference numerals may refer to the same feature, element, or component in the different drawings.

Illustrative, non-exhaustive examples, which may be, but are not necessarily, claimed, of the subject matter according to the present disclosure are provided below. Reference herein to "example" means that one or more feature, structure, element, component, characteristic, and/or operational step described in connection with the example is included in at least one embodiment and/or implementation of the subject matter according to the present disclosure. Thus, the phrases "an example," "another example," "an example," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

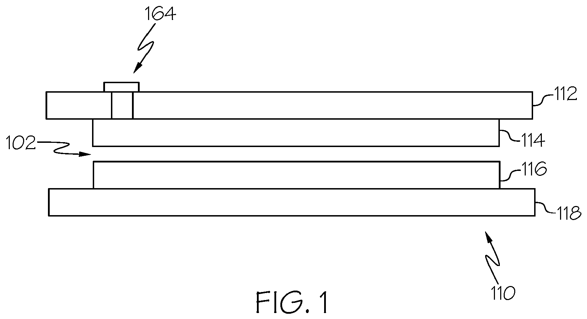

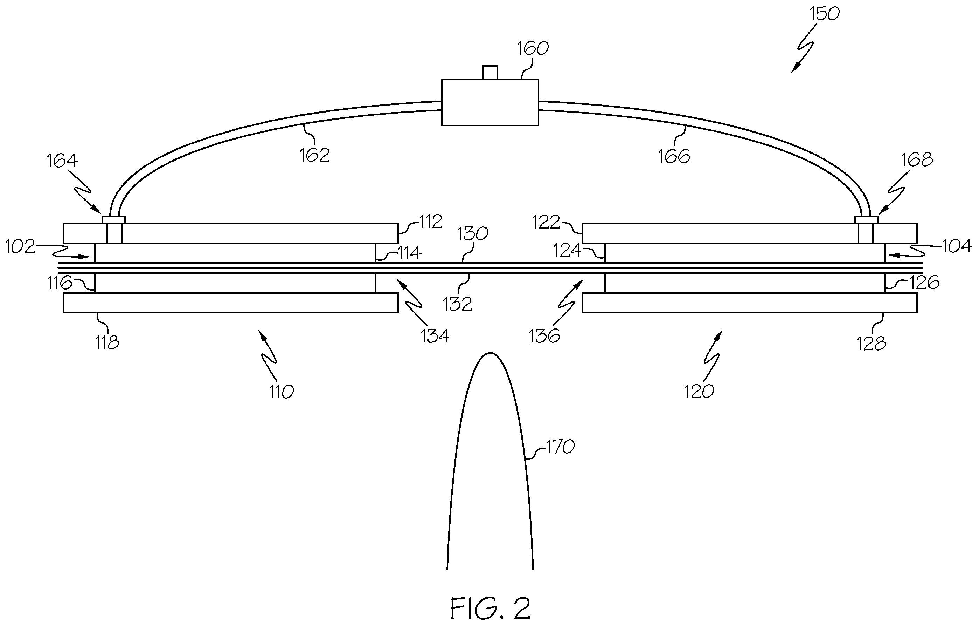

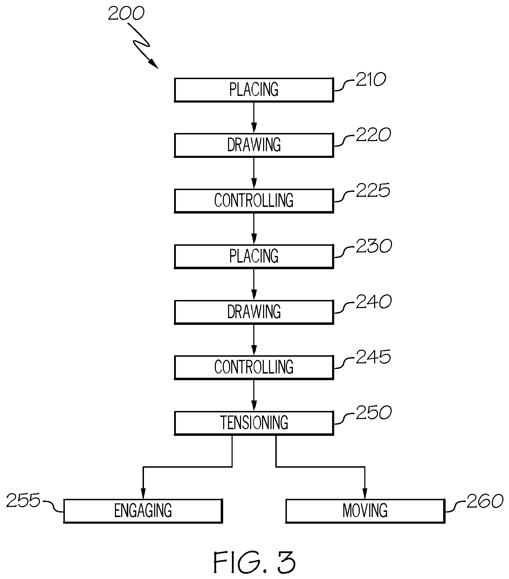

In one or more examples, the gripping apparatus 110 (FIG. 1), system 150 (FIG. 2), and method 200 (FIG. 3) may be used to facilitate manufacturing of composite parts, i.e., workpieces. In one example, composite parts, such as carbon fiber reinforcement polymer parts, are initially laid-up in multiple layers that together are referred to as a laminate or "prepreg." Individual fibers within each layer of the laminate are aligned parallel with each other, but different layers may exhibit different fiber orientations in order to increase the strength of the resulting composite part along different dimensions. The laminate may include a viscous resin that solidifies in order to harden the laminate into a composite part (e.g., for use in an aircraft). In an example, the gripping apparatus 110, system 150, method 200 may be used to facilitate manufacturing of composite parts comprised of thermoplastic resins.

Referring to FIG. 1, disclosed is a gripping apparatus 110. The gripping apparatus 110 includes an impermeable layer 112. The impermeable layer 112 defines a vacuum port 164. In one example, the impermeable layer 112 includes a polymeric material. In another example, the impermeable layer 112 includes rubber. In one non-limiting example, the impermeable layer 112 is Mosites^{™} rubber.

Still referring to FIG. 1, the gripping apparatus 110 includes a first flow media layer 114 associated with the impermeable layer. In one example, the first flow media layer 114 includes a biplanar mesh. In another example, the first flow media layer 114 is in the form of a sheet, such as a sheet of biplanar mesh.

The gripping apparatus 110 further includes a second flow media layer 116 opposed from the first flow media layer 114 to define a receiving space 102 therebetween. The receiving space 102 may be generally shaped and sized to receive a flexible material 130. In one example, the first flow media layer 114 is adjacent to the impermeable layer 112. In another example, the first flow media layer 114 is connected to the impermeable layer 112.

In one or more examples, the gripping apparatus 110 further includes a second impermeable layer 118 associated with the second flow media layer 116. The first flow media layer 114 and the second flow media layer 116 are positioned between the impermeable layer 112 and the second impermeable layer 118. In one example, the second flow media layer 116 is adjacent to the second impermeable layer 118. The second impermeable layer 118 may include a polymeric material. In another example, the second impermeable layer 118 may include rubber. In yet another example, the second impermeable layer 118 includes a metal.

In one or more examples, the impermeable layer 112 is comprised of a first material and the second impermeable layer 118 is comprised of a second material. The first material and the second material may be compositionally substantially the same. Alternatively, the first material and the second material may be compositionally different.

Referring to FIG. 2, disclosed is a system 150 for gripping a flexible material 130.The system 150 includes a gripping apparatus 110. The gripping apparatus 110 includes an impermeable layer 112. In one or more examples, the impermeable layer 112 of the gripping apparatus 110 comprises a polymeric material. In another example, the impermeable layer 112 of the gripping apparatus 110 comprises rubber.

Still referring to FIG. 2, the gripping apparatus 110 of the system 150 includes a first flow media layer 114 associated with the impermeable layer 112 of the gripping apparatus 110. In one example, the first flow media layer 114 of the gripping apparatus 110 is connected to the impermeable layer 112. The first flow media layer 114 of the gripping apparatus 110 may include a biplanar mesh.

Still referring to FIG. 2, the gripping apparatus 110 of the system 150 includes a second flow media layer 116 opposed from the first flow media layer 114 of the gripping apparatus 110 to define a receiving space 102 therebetween. In one example, the second flow media layer 116 of the gripping apparatus 110 includes a biplanar mesh.

The gripping apparatus 110 of the system 150 may further include a second impermeable layer 118 associated with the second flow media layer 116 of the gripping apparatus 110. The first flow media layer 114 of the gripping apparatus 110 and the second flow media layer 116 of the gripping apparatus 110 may be between the impermeable layer 112 of the gripping apparatus 110 and the second impermeable layer 118 of the gripping apparatus 110.

Referring to FIG. 2, the system 150 includes a second gripping apparatus 120. The second gripping apparatus 120 includes an impermeable layer 122 and a first flow media layer 124 associated with the impermeable layer 122 of the second gripping apparatus 120.

The second gripping apparatus 120 of the system 150 further includes a second flow media layer 126 opposed from the first flow media layer 124 of the second gripping apparatus 120 to define a second receiving space 104 therebetween. The second flow media layer 126 of the second gripping apparatus 120 may include a biplanar mesh.

In one or more examples, the second gripping apparatus 120 may further include a second impermeable layer 128 associated with the second flow media layer 126 of the second gripping apparatus 120. The first flow media layer 124 of the second gripping apparatus 120 and the second flow media layer 126 of the second gripping apparatus 120 may be between the impermeable layer 122 of the second gripping apparatus 120 and the second impermeable layer 128 of the second gripping apparatus 120.

Still referring to FIG. 2, the system 150 further includes a vacuum source 160 in fluid communication with the gripping apparatus 110 and the second gripping apparatus 120. The system 150 may further include a first vacuum tube 162 fluidly coupling the vacuum source 160 with a vacuum port 164 of the gripping apparatus 110. Further, the system 150 may include a second vacuum tube 166 fluidly coupling the vacuum source 160 with a second vacuum port 168 of the second gripping apparatus 120.

In one or more examples, the flexible material 130 includes a composite ply. In another example, the flexible material 130 includes a plurality of composite plies. In one example, the system 150 further includes a release film 132 coupled to the flexible material 130.

Still referring to FIG. 2, the system 150 may further include a tool 170 for engaging the flexible material 130. The tool 170 may be a mandrel. In one example, the tool 170 is in the shape of an aerospace component. The tool 170 may have prior a prior layer of the flexible material 130 on it, such as a ply of composite material.

Referring to FIG. 3, disclosed is a method 200 for gripping a flexible material 130. The flexible material 130 has a first portion 134 and second portion 136. In one example, the flexible material 130 comprises a composite ply. In another example, the flexible material 130 includes a plurality of composite plies. In yet another example, the flexible material 130 is coupled to a release film 132.

Still referring to FIG. 3, the method includes placing 210 a gripping apparatus 110 into contact with the first portion 134 of the flexible material 130. The gripping apparatus 110 includes an impermeable layer 112 and a flow media layer 114. The impermeable layer 112 defines a vacuum port 164. In one example, the impermeable layer 112 includes a polymeric material. In another example, the impermeable layer 112 includes rubber.

In one example, the gripping apparatus 110 includes a first flow media layer 114 associated with the impermeable layer. In one example, the first flow media layer 114 includes a biplanar mesh. In another example, the first flow media layer 114 is in the form of a sheet, such as a sheet of biplanar mesh.

The gripping apparatus 110 further includes a second flow media layer 116 opposed from the first flow media layer 114 to define a receiving space 102 therebetween. The receiving space 102 may be generally shaped and sized to receive a flexible material 130. In one example, the first flow media layer 114 is adjacent to the impermeable layer 112. In another example, the first flow media layer 114 is connected to the impermeable layer 112.

In one or more examples, the gripping apparatus 110 further includes a second impermeable layer 118 associated with the second flow media layer 116. The first flow media layer 114 and the second flow media layer 116 are positioned between the impermeable layer 112 and the second impermeable layer 118. In one example, the second flow media layer 116 is adjacent to the second impermeable layer 118. The second impermeable layer 118 may include a polymeric material. In another example, the second impermeable layer 118 may include rubber. In yet another example, the second impermeable layer 118 includes a metal.

In one or more examples, the gripping apparatus 110 impermeable layer 112 is comprised of a first material and the gripping apparatus 110 second impermeable layer 118 is comprised of a second material. The first material and the second material may be compositionally substantially the same. Alternatively, the first material and the second material may be compositionally different.

Still referring to FIG. 3, the method includes drawing 220 a vacuum between the gripping apparatus 110 and the first portion 134 of the flexible material 130 to engage the first portion 134 of the flexible material 130 with the gripping apparatus 110. In one example, the drawing 220 includes evacuation of air from the gripping apparatus 110 first flow media layer 114 and the gripping apparatus 110 second flow media layer 116. The drawing 220 locks the gripping apparatus 110 by evacuation of air, thus increasing friction among the layers of the gripping apparatus 110 and selectively controlling shear slippage.

The amount of vacuum drawn may vary based upon the material properties of the flexible material 130. The drawing 220 results in a gripping force applied to the flexible material 130. The gripping force applied to the flexible material 130 is dependent on the amount of vacuum drawn. For example, the amount of vacuum drawn may be a function of the flexible material 130 shear slippage properties to permit the desired amount of shear slippage between the flexible material 130 and the gripping apparatus 110.

Still referring to FIG. 3, the method includes placing 230 a second gripping apparatus 120 into contact with the second portion 136 of the flexible material 130, the second gripping apparatus 120 comprising a second gripping apparatus 120 impermeable layer 122 and a second gripping apparatus 120 first flow media layer 124.

The second gripping apparatus 120 impermeable layer 122 defines a second vacuum port 168. In one example, the second gripping apparatus 120 impermeable layer 122 includes a polymeric material. In another example, the second gripping apparatus 120 impermeable layer 122 includes rubber. In one non-limiting example, the second gripping apparatus 120 impermeable layer includes Mosites^{™} rubber.

Referring to FIG. 2, the second gripping apparatus 120 includes a second gripping apparatus 120 first flow media layer 124 associated with the impermeable layer. In one example, the second gripping apparatus 120 first flow media layer 124 includes a biplanar mesh. In another example, the second gripping apparatus 120 first flow media layer 124 is in the form of a sheet, such as a sheet of biplanar mesh.

The second gripping apparatus 120 further includes a second gripping apparatus 120 second flow media layer 126 opposed from the second gripping apparatus 120 first flow media layer 124 to define a receiving space 102 therebetween. The receiving space 102 may be generally shaped and sized to receive a flexible material 130. In one example, the second gripping apparatus 120 first flow media layer 124 is adjacent to the second gripping apparatus 120 impermeable layer 122. In another example, the second gripping apparatus 120 first flow media layer 124 is connected to the second gripping apparatus 120 impermeable layer 122.

In one or more examples, the second gripping apparatus 120 further includes a second impermeable layer 128 associated with the second gripping apparatus 120 second flow media layer 126. The second gripping apparatus 120 first flow media layer 124 and the second gripping apparatus 120 second flow media layer 126 are positioned between the second gripping apparatus 120 impermeable layer 122 and the second gripping apparatus 120 second impermeable layer 128. In one example, the second gripping apparatus 120 second flow media layer 126 is adjacent to the second gripping apparatus 120 second impermeable layer 128. The second gripping apparatus 120 second impermeable layer 128 may include a polymeric material. In another example, the second gripping apparatus 120 second impermeable layer 128 may include rubber. In yet another example, the second gripping apparatus 120 second impermeable layer 128 includes a metal.

In one or more examples, the second gripping apparatus 120 impermeable layer 122 is comprised of a first material and the second gripping apparatus 120 second impermeable layer 128 is comprised of a second material. The first material and the second material may be compositionally substantially the same. Alternatively, the first material and the second material may be compositionally different.

Still referring to FIG. 3, the method includes drawing 240 a vacuum between the second gripping apparatus 120 and the second portion 136 of the flexible material 130 to engage the second portion 136 of the flexible material 130 with the second gripping apparatus 120. In one example, the drawing 240 includes evacuation of air from the second gripping apparatus 120 first flow media layer 124 and the second gripping apparatus 120 second flow media layer 126. The drawing 240 locks the second gripping apparatus 120 by evacuation of air, thus increasing friction among the layers of the second gripping apparatus 120 and selectively controlling shear slippage.

The amount of vacuum drawn may vary based upon the material properties of the flexible material 130. The drawing 240 results in a gripping force applied to the flexible material 130. The gripping force applied to the flexible material 130 is dependent on the amount of vacuum drawn. For example, the amount of vacuum drawn may be a function of the flexible material 130 shear slippage properties to permit the desired amount of shear slippage between the flexible material 130 and the second gripping apparatus 120.

In one or more examples, the drawing 220 the vacuum between the gripping apparatus 110 and the first portion 134 of the flexible material 130 comprises controlling 225 a vacuum flow rate to maintain engagement between the first portion 134 of the flexible material 130 and the gripping apparatus 110, while permitting shear slippage of the first portion 134 of the flexible material 130 relative to the gripping apparatus 110. For example, the gripping force between the gripping apparatus 110 and the flexible material 130 may be a function of the amount of vacuum drawn.

In one or more examples, the drawing 240 the vacuum between the second gripping apparatus 120 and the second portion 136 of the flexible material 130 comprises controlling 245 a vacuum flow rate to maintain engagement between the second portion 136 of the flexible material 130 and the second gripping apparatus 120, while permitting shear slippage of the second portion 136 of the flexible material 130 relative to the second gripping apparatus 120. For example, the gripping force between the second gripping apparatus 120 and the flexible material 130 may be a function of the amount of vacuum drawn.

Still referring to FIG. 3, the method 200 further includes tensioning 250 the flexible material 130 while the first portion 134 of the flexible material 130 is engaged with the gripping apparatus 110 and the second portion 136 of the flexible material 130 is engaged with the second gripping apparatus 120. In one example, the tensioning 250 comprises engaging 255 the flexible material 130 with a tool 170. The engaging 255 may include draping the flexible material 130 over the tool 170. In another example, the tensioning 250 comprises moving 260 the gripping apparatus 110 relative to the second gripping apparatus 120. In one example, the moving 260 includes moving 260 the gripping apparatus 110 away from the second gripping apparatus 120.

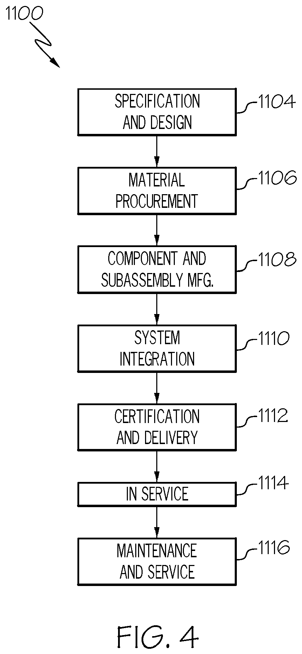

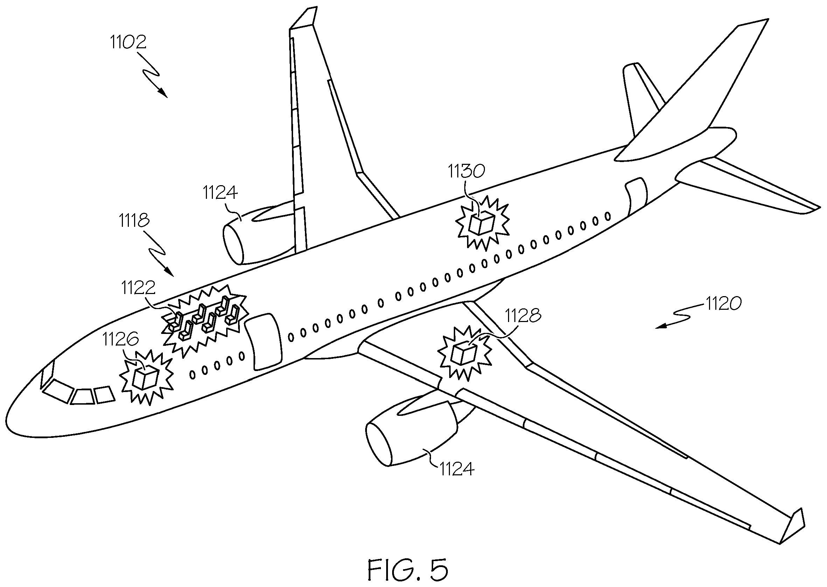

Examples of the present disclosure may be described in the context of aircraft manufacturing and service method 1100 as shown in FIG. 4 and aircraft 1102 as shown in FIG. 5. During pre-production, service method 1100 may include specification and design (block 1104) of aircraft 1102 and material procurement (Block 1106). During production, component and subassembly manufacturing (Block 1108) and system integration (Block 1110) of aircraft 1102 may take place. Thereafter, aircraft 1102 may go through certification and delivery (Block 1112) to be placed in service (Block 1114). While in service, aircraft 1102 may be scheduled for routine maintenance and service (Block 1116). Routine maintenance and service may include modification, reconfiguration, refurbishment, etc. of one or more systems of aircraft 1102.

Each of the processes of service method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 5, aircraft 1102 produced by service method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

Structure(s) and method(s) shown or described herein may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (Block 1114). Also, one or more examples of the structure(s), method(s), or combination thereof may be utilized during production stages production, component and subassembly manufacturing (Block 1108) and system integration (1110), for example, by substantially expediting assembly of or reducing the cost of aircraft 1102. Similarly, one or more examples of the structure or method realizations, or a combination thereof, may be utilized, for example and without limitation, while aircraft 1102 is in service (Block 1114) and/or during maintenance and service (Block 1116).

Different examples of the structure(s) and method(s) disclosed herein include a variety of components, features, and functionalities. It should be understood that the various examples of the structure(s) and method(s) disclosed herein may include any of the components, features, and functionalities of any of the other examples of the structure(s) and method(s) disclosed herein in any combination, and all of such possibilities are intended to be within the scope of the present disclosure.

Many modifications of examples set forth herein will come to mind to one skilled in the art to which the present disclosure pertains having the benefit of the teachings presented in the foregoing descriptions and the associated drawings.

Therefore, it is to be understood that the present disclosure is not to be limited to the specific examples illustrated and that modifications and other examples are intended to be included within the scope of the appended claims. Moreover, although the foregoing description and the associated drawings describe examples of the present disclosure in the context of certain illustrative combinations of elements and/or functions, it should be appreciated that different combinations of elements and/or functions may be provided by alternative implementations without departing from the scope of the appended claims. Accordingly, parenthetical reference numerals in the appended claims are presented for illustrative purposes only and are not intended to limit the scope of the claimed subject matter to the specific examples provided in the present disclosure.

## Claims

1. A gripping apparatus (110) comprising:
an impermeable layer (112) defining a vacuum port;
a first flow media layer (114) associated with the impermeable layer (112);
a second flow media layer (116) opposed from the first flow media layer (114) to define a receiving space therebetween; and
a second impermeable layer (118) associated with the second flow media layer (116), wherein the first flow media layer (114) and the second flow media layer (116) are between the impermeable layer (112) and the second impermeable layer (118), wherein the second flow media layer (116) is adjacent to the second impermeable layer (118).

2. The gripping apparatus of Claim 1, wherein the first flow media layer (114) is adjacent to the impermeable layer (112).

3. The gripping apparatus of Claim 1or 2, wherein the first flow media layer (112) comprises a biplanar mesh.

4. The gripping apparatus (110) according to any of Claims 1 to 3, wherein the second impermeable layer (118) comprises a polymeric material.

5. The gripping apparatus (110) according to any of Claims 1 to 4, wherein the second impermeable layer (118) comprises rubber.

6. A system for gripping a flexible material, the system comprising:
a gripping apparatus (110) according to any of claims 1 to 5,
a second gripping apparatus (120) comprising:
an impermeable layer (122);
a first flow media layer (124) associated with the impermeable layer (122) of the second gripping apparatus (120); and
a second flow media layer (126) opposed from the first flow media layer (124) of the second gripping apparatus (120) to define a second receiving space (104) therebetween, wherein the second gripping apparatus (120) further comprises a second impermeable layer (120) associated with the second flow media layer (126) of the second gripping apparatus (120), and wherein the first flow media layer (124) of the second gripping apparatus (120) and the second flow media layer (126) of the second gripping apparatus (120) are between the impermeable layer (122) of the second gripping apparatus (120) and the second impermeable layer (128) of the second gripping apparatus (120); and
a vacuum source (160) in fluid communication with the gripping apparatus (110) and the second gripping apparatus (120).

7. The system (150) of Claim 6, wherein the flexible material (130) comprises a composite ply.

8. The system (150) according to Claim 6 or 7, wherein the impermeable layer (112) of the gripping apparatus (110) comprises rubber.

9. A method (200) for gripping a flexible material (130), the flexible material (130) comprising a first portion (134) and second portion (136), the method comprising:
placing (210) a gripping apparatus (110) into contact with the first portion (134) of the flexible material (130), the gripping apparatus (110) comprising an impermeable layer (112) and a flow media layer (114), wherein the gripping apparatus (110) further comprises a second impermeable layer (118) and a second flow media layer (116), and wherein the flow media layer (114) of the gripping apparatus (110) and the second flow media layer (116) of the gripping apparatus (110) are between the impermeable layer (112) of the gripping apparatus (110) and the second impermeable layer (118) of the gripping apparatus (110);
drawing a vacuum between the gripping apparatus (110) and the first portion (134) of the flexible material (130) to engage the first portion (134) of the flexible material (130) with the gripping apparatus (110);
placing a second gripping apparatus (120) into contact with the second portion (136) of the flexible material (130), the second gripping apparatus (120) comprising an impermeable layer (112) and a flow media layer (114), wherein the second gripping apparatus (120) further comprises a second impermeable layer (120) and a second flow media layer (126), and wherein the flow media layer (124) of the second gripping apparatus (120) and the second flow media layer (126) of the second gripping apparatus (120) are between the impermeable layer (122) of the second gripping apparatus (120) and the second impermeable layer (128) of the second gripping apparatus (120); and
drawing a vacuum between the second gripping apparatus (120) and the second portion (136) of the flexible material (130) to engage the second portion (136) of the flexible material (130) with the second gripping apparatus (120).

10. The method (200) of Claim 9, wherein the flexible material (130) comprises a composite ply.

11. The method of Claim 9 or 10, wherein the drawing the vacuum between the gripping apparatus and the first portion of the flexible material comprises controlling a vacuum flow rate to maintain engagement between the first portion of the flexible material and the gripping apparatus, while permitting shear slippage of the first portion of the flexible material relative to the gripping apparatus.

12. The method of any of Claims 9 to 11, wherein the drawing the vacuum between the second gripping apparatus and the second portion of the flexible material comprises controlling a vacuum flow rate to maintain engagement between the second portion of the flexible material and the second gripping apparatus, while permitting shear slippage of the second portion of the flexible material relative to the second gripping apparatus.

13. The method of any of Claims 9 to 12, further comprising tensioning the flexible material while the first portion of the flexible material is engaged with the gripping apparatus and the second portion of the flexible material is engaged with the second gripping apparatus.

14. The method of Claim 13, wherein the tensioning comprises engaging the flexible material with a tool.

15. The method according to Claim 13 or 14, wherein the tensioning comprises moving the gripping apparatus relative to the second gripping apparatus.

## Patentansprüche

1. Greifeinrichtung (110), aufweisend:
eine undurchlässige Schicht (112), die einen Vakuumanschluss definiert;
eine erste Strömungsmedienschicht (114), die der undurchlässigen Schicht (112) zugeordnet ist;
eine zweite Strömungsmedienschicht (116), die der ersten Strömungsmedienschicht (114) entgegengesetzt ist, um einen Aufnahmebereich dazwischen zu definieren; und
eine zweite undurchlässige Schicht (118), die der zweiten Strömungsmedienschicht (116) zugeordnet ist,
wobei die erste Strömungsmedienschicht (114) und die zweite Strömungsmedienschicht (116) zwischen der undurchlässigen Schicht (112) und der zweiten undurchlässigen Schicht (118) angeordnet sind,
wobei die zweite Strömungsmedienschicht (116) an die zweite undurchlässige Schicht (118) angrenzt.

2. Greifeinrichtung nach Anspruch 1, wobei die erste Strömungsmedienschicht (114) an die undurchlässige Schicht (112) angrenzt.

3. Greifeinrichtung nach Anspruch 1 oder 2, wobei die erste Strömungsmedienschicht (112) ein biplanares Geflecht aufweist.

4. Greifeinrichtung (110) nach einem der Ansprüche 1 bis 3, wobei die zweite undurchlässige Schicht (118) ein polymeres Material aufweist.

5. Greifeinrichtung (110) nach einem der Ansprüche 1 bis 4, wobei die zweite undurchlässige Schicht (118) Gummi aufweist.

6. System zum Greifen eines flexiblen Materials, wobei das System aufweist:
eine Greifeinrichtung (110) nach einem der Ansprüche 1 bis 5,
eine zweite Greifeinrichtung (120), aufweisend:
eine undurchlässige Schicht (122);
eine erste Strömungsmedienschicht (124), die der undurchlässigen Schicht (122) der zweiten Greifeinrichtung (120) zugeordnet ist; und
eine zweite Strömungsmedienschicht (126), die der ersten Strömungsmedienschicht (124) der zweiten Greifeinrichtung (120) entgegengesetzt ist, um einen zweiten Aufnahmebereich (104) dazwischen zu definieren, wobei die zweite Greifeinrichtung (120) des Weiteren eine zweite undurchlässige Schicht (128) aufweist, die der zweiten Strömungsmedienschicht (126) der zweiten Greifeinrichtung (120) zugeordnet ist, und wobei die erste Strömungsmedienschicht (124) der zweiten Greifeinrichtung (120) und die zweite Strömungsmedienschicht (126) der zweiten Greifeinrichtung (120) zwischen der undurchlässigen Schicht (122) der zweiten Greifeinrichtung (120) und der zweiten undurchlässigen Schicht (128) der zweiten Greifeinrichtung (120) angeordnet sind; und
eine Vakuumquelle (160), die fluidisch mit der Greifeinrichtung (110) und der zweiten Greifeinrichtung (120) verbunden ist.

7. System (150) nach Anspruch 6, wobei das flexible Material (130) eine Verbundwerkstofflage aufweist.

8. System (150) nach Anspruch 6 oder 7, wobei die undurchlässige Schicht (112) der Greifeinrichtung (110) Gummi aufweist.

9. Verfahren (200) zum Greifen eines flexiblen Materials (130), wobei das flexible Material (130) einen ersten Abschnitt (134) und einen zweiten Abschnitt (136) aufweist, wobei das Verfahren aufweist:
Anordnen (210) einer Greifeinrichtung (110) in Kontakt mit dem ersten Abschnitt (134) des flexiblen Materials (130), wobei die Greifeinrichtung (110) eine undurchlässige Schicht (112) und eine Strömungsmedienschicht (114) aufweist, wobei die Greifeinrichtung (110) des Weiteren eine zweite undurchlässige Schicht (118) und eine zweite Strömungsmedienschicht (116) aufweist, und wobei die Strömungsmedienschicht (114) der Greifeinrichtung (110) und die zweite Strömungsmedienschicht (116) der Greifeinrichtung (110) zwischen der undurchlässigen Schicht (112) der Greifeinrichtung (110) und der zweiten undurchlässigen Schicht (118) der Greifeinrichtung (110) angeordnet sind;
Erzeugen eines Vakuums zwischen der Greifeinrichtung (110) und dem ersten Abschnitt (134) des flexiblen Materials (130), um den ersten Abschnitt (134) des flexiblen Materials (130) mit der Greifeinrichtung (110) zu verbinden;
Anordnen einer zweiten Greifeinrichtung (120) in Kontakt mit dem zweiten Abschnitt (136) des flexiblen Materials (130), wobei die zweite Greifeinrichtung (120) eine undurchlässige Schicht (112) und eine Strömungsmedienschicht (114) aufweist, wobei die zweite Greifeinrichtung (120) des Weiteren eine zweite undurchlässige Schicht (120) und eine zweite Strömungsmedienschicht (126) aufweist, und wobei die Strömungsmedienschicht (124) der zweiten Greifeinrichtung (120) und die zweite Strömungsmedienschicht (126) der zweiten Greifeinrichtung (120) zwischen der undurchlässigen Schicht (122) der zweiten Greifeinrichtung (120) und der zweiten undurchlässigen Schicht (128) der zweiten Greifeinrichtung (120) angeordnet sind; und
Erzeugen eines Vakuums zwischen der zweiten Greifeinrichtung (120) und dem zweiten Abschnitt (136) des flexiblen Materials (130), um den zweiten Abschnitt (136) des flexiblen Materials (130) mit der zweiten Greifeinrichtung (120) zu verbinden.

10. Verfahren (200) nach Anspruch 9, wobei das flexible Material (130) eine Verbundwerkstofflage aufweist.

11. Verfahren nach Anspruch 9 oder 10, wobei das Erzeugen des Vakuums zwischen der Greifeinrichtung und dem ersten Abschnitt des flexiblen Materials das Steuern einer Vakuumdurchflussrate umfasst, um den Eingriff zwischen dem ersten Abschnitt des flexiblen Materials und der Greifeinrichtung aufrechtzuerhalten, während ein Scherkriechen des ersten Abschnitts des flexiblen Materials relativ zu der Greifeinrichtung ermöglicht wird.

12. Verfahren nach einem der Ansprüche 9 bis 11, wobei das Erzeugen des Vakuums zwischen der zweiten Greifeinrichtung und dem zweiten Abschnitt des flexiblen Materials das Steuern einer Vakuumdurchflussrate umfasst, um den Eingriff zwischen dem zweiten Abschnitt des flexiblen Materials und der zweiten Greifeinrichtung aufrechtzuerhalten, während ein Scherkriechen des zweiten Abschnitts des flexiblen Materials relativ zu der zweiten Greifeinrichtung ermöglicht wird.

13. Verfahren nach einem der Ansprüche 9 bis 12, des Weiteren aufweisend das Spannen des flexiblen Materials, während der erste Abschnitt des flexiblen Materials mit der Greifeinrichtung verbunden ist und der zweite Abschnitt des flexiblen Materials mit der zweiten Greifeinrichtung verbunden ist.

14. Verfahren nach Anspruch 13, wobei das Spannen das Verbinden des flexiblen Materials mit einem Werkzeug umfasst.

15. Verfahren nach Anspruch 13 oder 14, wobei das Spannen das Bewegen der Greifeinrichtung relativ zu der zweiten Greifeinrichtung umfasst.

## Revendications

1. Appareil de préhension (110) comprenant :
une couche imperméable (112) définissant un orifice de vide ;
une première couche de support de flux (114) associée à la couche imperméable (112) ;
une seconde couche de support de flux (116) opposée à la première couche de support de flux (114) pour définir un espace de réception entre les deux ; et
une seconde couche imperméable (118) associée à la seconde couche de support de flux (116), dans lequel la première couche de support de flux (114) et la seconde couche de support de flux (116) se trouvent entre la couche imperméable (112) et la seconde couche imperméable (118), dans lequel la seconde couche de support de flux (116) est adjacente à la seconde couche imperméable (118).

2. Appareil de préhension selon la revendication 1, dans lequel la première couche de support de flux (114) est adjacente à la couche imperméable (112).

3. Appareil de préhension selon la revendication 1 ou 2, dans lequel la première couche de support de flux (112) comprend une maille biplan.

4. Appareil de préhension (110) selon l'une quelconque des revendications 1 à 3, dans lequel la seconde couche imperméable (118) comprend un matériau polymère.

5. Appareil de préhension (110) selon l'une quelconque des revendications 1 à 4, dans lequel la seconde couche imperméable (118) comprend du caoutchouc.

6. Système de préhension d'un matériau souple, le système comprenant :
un appareil de préhension (110) selon l'une quelconque des revendications 1 à 5,
un second appareil de préhension (120) comprenant :
une couche imperméable (122) ;
une première couche de support de flux (124) associée à la couche imperméable (122) du second appareil de préhension (120) ; et
une seconde couche de support de flux (126) opposée à la première couche de support de flux (124) du second appareil de préhension (120) pour définir un second espace de réception (104) entre les deux, dans lequel le second appareil de préhension (120) comprend en outre une seconde couche imperméable (120) associée à la seconde couche de support de flux (126) du second appareil de préhension (120), et dans lequel la première couche de support de flux (124) du second appareil de préhension (120) et la seconde couche de support de flux (126) du second appareil de préhension (120) sont entre la couche imperméable (122) du second appareil de préhension (120) et la seconde couche imperméable (128) du second appareil de préhension (120) ; et
une source de vide (160) en communication fluide avec l'appareil de préhension (110) et le second appareil de préhension (120).

7. Système (150) selon la revendication 6, dans lequel le matériau souple (130) comprend un pli composite.

8. Système (150) selon la revendication 6 ou 7, dans lequel la couche imperméable (112) de l'appareil de préhension (110) comprend du caoutchouc.

9. Procédé (200) destiné à saisir un matériau flexible (130), le matériau flexible (130) comprenant une première partie (134) et une seconde partie (136), le procédé comprenant :
le placement (210) d'un appareil de préhension (110) en contact avec la première partie (134) du matériau souple (130), l'appareil de préhension (110) comprenant une couche imperméable (112) et une couche de support de flux (114), dans lequel l'appareil de préhension (110) comprend en outre une seconde couche imperméable (118) et une seconde couche de support de flux (116), et dans lequel la couche de support de flux (114) de l'appareil de préhension (110) et la seconde couche de support de flux (116) de l'appareil de préhension (110) se trouvent entre la couche imperméable (112) de l'appareil de préhension (110) et la seconde couche imperméable (118) de l'appareil de préhension (110) ;
le tirage d'un vide entre l'appareil de préhension (110) et la première partie (134) du matériau souple (130) pour mettre en prise la première partie (134) du matériau souple (130) avec l'appareil de préhension (110) ;
le placement d'un second appareil de préhension (120) en contact avec la seconde partie (136) du matériau souple (130), le second appareil de préhension (120) comprenant une couche imperméable (112) et une couche de support de flux (114), dans lequel le second appareil de préhension (120) comprend en outre une seconde couche imperméable (120) et une seconde couche de support de flux (126), et dans lequel la couche de support de flux (124) du second appareil de préhension (120) et la seconde couche de support de flux (126) du second appareil de préhension (120) se trouvent entre la couche imperméable (122) du second appareil de préhension (120) et la seconde couche imperméable (128) du second appareil de préhension (120) ; et
le tirage d'un vide entre le second appareil de préhension (120) et la seconde partie (136) du matériau souple (130) pour mettre en prise la seconde partie (136) du matériau souple (130) avec le second appareil de préhension (120).

10. Procédé (200) selon la revendication 9, dans lequel le matériau souple (130) comprend un pli composite.

11. Procédé selon la revendication 9 ou 10, dans lequel le fait de faire le vide entre l'appareil de préhension et la première partie du matériau souple comprend la régulation d'un taux de flux de vide pour maintenir la prise entre la première partie du matériau souple et l'appareil de préhension, tout en permettant le glissement par cisaillement de la première partie du matériau souple par rapport à l'appareil de préhension.

12. Procédé selon l'une quelconque des revendications 9 à 11, dans lequel le fait de faire le vide entre le second appareil de préhension et la seconde partie du matériau souple comprend la régulation d'un taux de flux de vide pour maintenir la prise entre la seconde partie du matériau souple et le second appareil de préhension, tout en permettant le glissement par cisaillement de la seconde partie du matériau souple par rapport au second appareil de préhension.

13. Procédé selon l'une quelconque des revendications 9 à 12, comprenant en outre la mise en tension du matériau souple pendant que la première partie du matériau souple est en prise avec l'appareil de préhension et que la seconde partie du matériau souple est en prise avec le second appareil de préhension.

14. Procédé selon la revendication 13, dans lequel la tension comprend la prise du matériau souple avec un outil.

15. Procédé selon la revendication 13 ou 14, dans lequel la tension comprend le déplacement de l'appareil de préhension par rapport au second appareil de préhension.
